# EUROPEAN PATENT APPLICATION

(11) **EP 3 009 644 A1**
(43) Date of publication of application: **20.04.2016**
(21) Application number: 15182897.7
(22) Date of filing: 28.08.2015
(51) Int. Cl.: F02D 41/04, F02N 11/08, F02D 11/10, F02D 41/00, F02N 19/00

(54) **ENGINE CONTROL APPARATUS**

(30) Priority: 15.10.2014 JP 2014210487
(71) Applicant: TOYOTA JIDOSHA KABUSHIKI KAISHA, Toyota-shi, Aichi-ken, 471-8571 (JP)
(72) Inventor: KATO, Hirokazu, Toyota-shi, Aichi-ken, 471-8571 (JP)
(74) Representative: TBK

(57) **Abstract**

There is provided an engine control apparatus comprising: a vehicle speed detecting unit configured to detect own vehicle speed; an idle stop control unit configured to automatically stop an engine upon a stop condition being met, and restart the engine upon a restart conditions being met during or after completing the automatic engine stop operation, wherein the stop condition includes a condition of a vehicle speed being equal to or less than a first threshold value; a throttle control unit configured to perform a throttle opening increase control for increasing a target opening of throttle opening and keeping it during the automatic engine stop operation; and a determining unit configured to determine the predetermined target opening and the predetermined target period so that at least one of them is increased as the vehicle speed becomes greater.

## Description

### BACKGROUND OF THE INVENTION

### 1. Field of the Invention

The disclosure is related to an engine control apparatus.

### 2. Description of the Related Art

A vehicle engine control apparatus is known, which determines whether to perform a rotational speed control process for increasing a throttle opening of an engine after an engine stop condition is met according to a driving state of the engine (for example, Japanese Laid-open Patent Publication No. 2008-280919).

By the way, when performing the rotational speed control process as disclosed in the patent document 1, while re-startability after completing the automatic engine stop can be improved, engine vibration during the automatic engine stop operation becomes greater in accordance with an increase of air quantity blown into a cylinder during the automatic engine stop operation, which causes a deterioration of product quality.

### [RELATED ART DOCUMENT]

### [PATENT DOCUMENT]

[Patent Document 1] Japanese Laid-open Patent Publication No. 2008-280919

### SUMMARY OF THE INVENTION

An object of the present disclosure is to provide an engine control apparatus capable of balancing the product quality regarding the engine vibration during the automatic engine stop and the startability at restarting the engine.

The following configuration is adopted to achieve the aforementioned object.

In one aspect of the embodiment, there is provided an engine control apparatus comprising: a vehicle speed detecting unit configured to detect own vehicle speed; an idle stop control unit configured to automatically stop an engine upon a stop condition being met, and restart the engine upon a restart condition being met during an automatic engine stop operation or after completing the automatic engine stop operation, wherein the stop condition includes a condition that is to be met when the vehicle speed detected by the vehicle speed detecting unit during the automatic engine stop operation is equal to or less than a first threshold value which is greater than "0"; a throttle control unit configured to perform a throttle opening increase control during the automatic engine stop operation, wherein the throttle opening increase control includes a process for increasing a target opening of throttle opening to a predetermined target opening and then keeping the throttle opening at the target opening for a predetermined target period which is greater than "0"; and a determining unit configured to determine the predetermined target opening and the predetermined target period so that at least one of the predetermined target opening and the predetermined target period is increased as the vehicle speed detected by the vehicle speed detecting unit at a certain timing becomes greater, the vehicle speed detected at the certain timing defining the vehicle speed during the automatic engine stop operation.

Other objects, features and advantages of the present invention will become more apparent from the following detailed description when read in conjunction with the accompanying drawings.

### BRIEF DESCRIPTION OF THE DRAWINGS

Fig. 1 is a block diagram for illustrating an example configuration of an engine control apparatus.
Fig. 2 is a flowchart for schematically illustrating an example of a process performed by a control device.
Fig. 3A is a diagram for illustrating an example of a relationship between a vehicle speed and a predetermined target opening.
Fig. 3B is a diagram for illustrating an example of a relationship between the vehicle speed and a predetermined target period.
Fig. 4A is a timing diagram for illustrating a manner of a change in engine speed during an automatic engine stop operation.
Fig. 4B is a timing diagram for illustrating a manner of a change in the target opening of the throttle opening during the automatic engine stop operation.
Fig. 5 is a flowchart for schematically illustrating another example of the process performed by the control device.
Fig. 6 is a flowchart for schematically illustrating another example of the process performed by the control device.
Fig. 7 is a flowchart for schematically illustrating an example of the process performed by the control device during the throttle opening increase control.

### DETAILED DESCRIPTION OF THE PREFERRED EMBODIMENTS

In the following, embodiments are described in detail with reference to appended drawings.

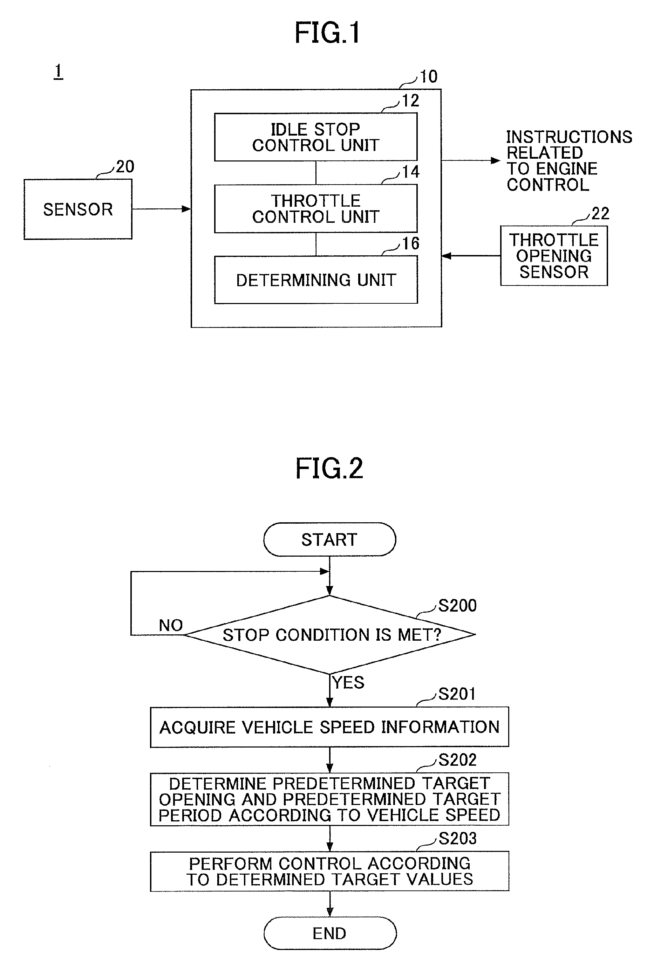

Fig. 1 is a block diagram for illustrating an example configuration of an engine control apparatus. Respective units shown in Fig. 1 are connected in an arbitrary manner. For example, the respective units may be connected through a bus such as a CAN (Controller Area Network), may be connected indirectly through another ECU, etc., or connected directly, or may be connected in a manner capable of performing wireless communication.

The engine control apparatus 1 includes at least a control device 10 and a sensor (an example of a vehicle speed detecting unit) 20. The engine control apparatus 1 may further include a throttle opening sensor 22.

The control device 10 may include a processing device such as a microcomputer. Functions of the control device 10 may be achieved by arbitrary hardware, software or firmware, or a combination thereof. The control device 10 may be achieved by a plurality of processing devices.

The control device 10 includes an idle stop control unit 12, a throttle control unit 14 and a determining unit 16. Additionally, the idle stop control unit 12, the throttle control unit 14 and the determining unit 16 are virtually disposed in a separated manner for convenience of explanation, and for example, a program for achieving the throttle control unit 14 may include a part or all of a program for achieving the determining unit 16, or a program for achieving the determining unit 16 may include a part or all of the program for achieving the throttle control unit 14.

The idle stop control unit 12 performs idle stop control. The idle stop control includes a process for automatically stopping an engine (not shown) in a case where a stop condition is met while the engine is operated. The stop condition may be arbitrarily set. For example, when all of conditions (1) - (3) described in the following are met, the stop condition is met.

Condition (1): vehicle speed of the vehicle is equal to or less than a predetermined first vehicle speed (an example of a first threshold) V1 (greater than "0").

Condition (2): an accelerator pedal is not stepped on.

Condition (3): a negative pressure value of a brake booster is at a position which is on the vacuum side of a predetermined threshold value.

Additionally, the conditions (1) - (3) are examples and may be changed if needed. Also, a condition related to a state of a driver's brake operation, a state of an air conditioner or a state of a battery (SOC: State Of Charge) may be added to the conditions (1) - (3) as a logical AND condition. In the following, an operation of the idle stop control unit 12 for automatically stopping the engine is referred to as "automatic engine stop operation". The idle stop control unit 12 starts the automatic engine stop operation by stopping providing fuel to the engine (fuel cut). In the following, for convenience of explanation, "fuel cut" means a fuel cut upon the stop condition being met.

The idle stop control unit 12 automatically restarts the engine in a case where a restart condition is met during the automatic engine stop operation or after completing the automatic engine stop operation. "During the automatic engine stop operation" means a period from a timing at which the automatic engine stop is started to a timing at which the engine speed becomes "0". The restart condition may be arbitrarily set. For example, the restart condition is met when any one of conditions (4) - (6) described in the following is not met.

Condition (4): vehicle speed of the vehicle is equal to or less than a predetermined second value (an example of a second threshold) V11 (greater than or equal to V1).

Condition (5): an accelerator pedal is not stepped on.

Condition (6): a negative pressure value of a brake booster is at a position which is on the vacuum side of a predetermined threshold value.

The throttle control unit 14 performs throttle control during the automatic engine stop operation. The determining unit 16 determines a manner in which the throttle control during the automatic engine stop operation is performed as described below. Therefore, the throttle control unit 14 performs the throttle control during the automatic engine stop operation in the manner determined by the determining unit 16. The throttle control during the automatic engine stop operation includes a throttle opening increase control. The throttle opening increase control includes a process for increasing (stepping-up) a target opening of the throttle opening to a predetermined target opening and keeping the increased target opening during a predetermined target period.

When performing the throttle opening increase control, the throttle control unit 14 starts to increase the target opening of the throttle opening toward the predetermined target opening at a certain timing for starting the control. The certain timing for starting the control depends on a control state of the fuel cut and a control state, and it comes after the fuel cut. For example, "after the fuel cut" may be a timing at which the fuel cut is completed (for example, a timing at which a fuel cut flag is set to be "ON") or a timing after passing a predetermined period from that.

The determining unit 16 determines the manner in which the throttle control during the automatic engine stop operation is performed based on vehicle speed information (vehicle speed information from the sensor 20) at a certain timing so that the air quantity blown into a cylinder of the engine during the automatic engine stop operation is increased as the vehicle speed indicated by the vehicle speed information at certain timing becomes greater, where the vehicle speed information indicates the vehicle speed during the automatic engine stop operation. The certain timing may be arbitrarily set as long as it is used for defining the vehicle speed during the automatic engine stop operation directly or indirectly. For example, the certain timing may be a timing when the stop condition is met, a timing for starting the control, or an arbitrary timing in a period between the timings. The throttle control during the automatic engine stop operation includes the throttle opening increase control performed by the throttle control unit 14.

In an embodiment, the manner in which the throttle control during the automatic engine stop operation is performed may mean how to perform the throttle opening increase control (performing method) assuming that the throttle control is performed during the automatic engine stop operation (see Fig. 2, etc.). For example, the determining unit 16 determines the predetermined target opening and the predetermined target period based on the vehicle speed information at a certain timing so that at least one of the predetermined target opening and the predetermined target period is increased as the vehicle speed indicated by the vehicle speed information at a certain timing becomes greater. When the predetermined target period becomes greater (longer), the air quantity blown into a cylinder of the engine during the automatic engine stop operation is increased. Also, when the predetermined target opening becomes greater, the air quantity blown into a cylinder of the engine during the automatic engine stop operation is increased.

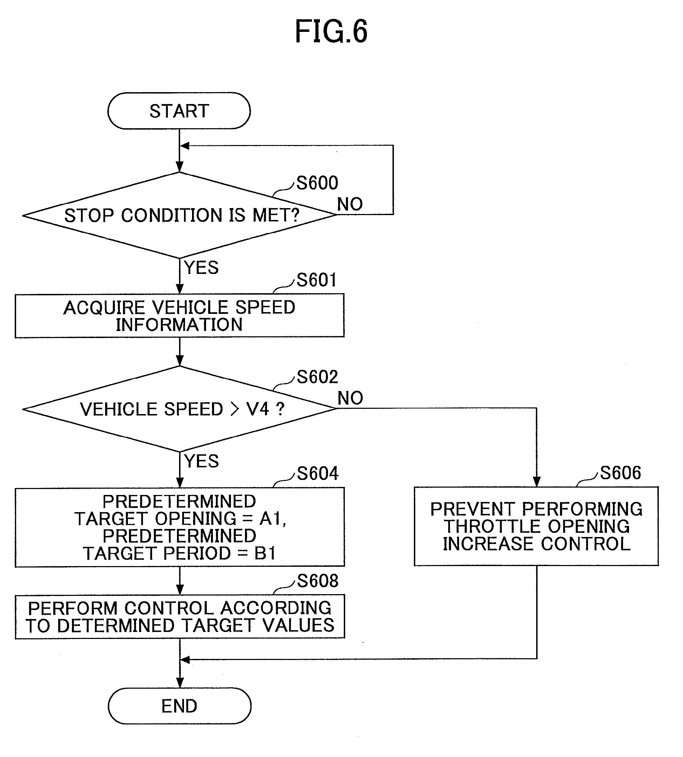

In another embodiment, the manner in which the throttle control during the automatic engine stop operation is performed includes whether to perform the throttle opening increase control (see Fig. 6). For example, the determining unit 16 determines to perform the throttle opening increase control when the vehicle speed based on the vehicle speed information at a certain timing is greater than a predetermined threshold, and determines to prevent performing the throttle opening increase control when the vehicle speed is equal to or less than a predetermined threshold. In this case, the manner in which the throttle control during the automatic engine stop operation is performed may include how to perform the throttle opening increase control (performing method) when determining to perform the throttle control during the automatic engine stop operation.

The sensor 20 acquires the vehicle speed information indicating the vehicle speed. For example, the sensor 20 is configured with wheel speed sensors. The wheel speed sensors, for example, are disposed at respective wheels of the vehicle.

The throttle opening sensor 22 acquires throttle opening information indicating opening (throttle opening) of a throttle valve (not shown).

According to the engine control apparatus 1 shown in Fig. 1, as described above, the determining unit 16 determines the manner in which the throttle control during the automatic engine stop operation is performed so that the air quantity blown into a cylinder of the engine during the automatic engine stop operation is increased as the vehicle speed indicated by the vehicle speed information at a certain timing becomes greater. In other words, the determining unit 16 determines the manner so that the air quantity blown into a cylinder of the engine during the automatic engine stop operation is decreased as the vehicle speed indicated by the vehicle speed information at certain timing becomes lower. As described above, since the performance of the throttle opening increase control causes the throttle opening to be greater than before performing, engine vibration occurs. The engine vibration tends to be greater when the air quantity blown into a cylinder during the automatic engine stop operation is increased. Therefore, when the air quantity blown into a cylinder of the engine during the automatic engine stop operation becomes smaller, the engine vibration will be correspondingly reduced. Since the engine vibration is transmitted to the vehicle body, it affects product quality when sensed by a user such as a driver. When the vehicle speed is relatively low, the engine vibration caused by vehicle travelling is likely to be small. Therefore the engine vibration caused by the throttle opening increase control is likely to be sensed by the user. According to the engine control apparatus 1 shown in Fig. 1, the product quality can be improved since the air quantity blown into a cylinder of the engine during the automatic engine stop operation is reduced in a range of the vehicle speed where the engine vibration is likely to be sensed by the user in comparison to the air quantity in a range of relatively high vehicle speed.

Also, according to the engine control apparatus 1 shown in Fig. 1, as described above, the determining unit 16 determines the manner in which the throttle control is performed during the automatic engine stop operation so that the air quantity blown into a cylinder of the engine during the automatic engine stop operation is increased as the vehicle speed indicated by the vehicle speed information at a certain timing becomes greater. As described above, since the performance of the throttle opening increase control causes the throttle opening to be greater than before performing, startability of the engine at engine restart is improved. Specifically, the startability of the engine depends on a position of a piston at completing the automatic engine stop operation, and generally, BTDC (Before Top Dead Center) is preferable as the position of a piston at completing the automatic engine stop operation. By providing enough air into the cylinder during the automatic engine stop operation, the respective reaction forces of the cylinders in the compression stroke and in the expansion stroke are balanced, which increases a possibility to have the position of a piston at completing the automatic engine stop operation be around the BTDC. Therefore, when the air quantity blown into a cylinder of the engine during the automatic engine stop operation becomes greater, the possibility for improving the startability of the engine at engine restart is correspondingly increased. Meanwhile, as described above, when the air quantity blown into a cylinder of the engine during the automatic engine stop operation is increased, the engine vibration is likely to occur which may cause a problem. When the vehicle speed is relatively high, the engine vibration caused by vehicle travelling is likely to be large. Therefore the engine vibration caused by the throttle opening increase control is unlikely to be sensed by the user. According to the engine control apparatus 1 shown in Fig. 1, the startability at engine restart can be improved without degrading the product quality since the air quantity blown into a cylinder of the engine during the automatic engine stop operation is increased in a range of relatively high vehicle speed where the engine vibration is unlikely to be sensed by the user.

Thus, according to the engine control apparatus 1 shown in Fig.1, the product quality regarding the engine vibration during the automatic engine stop operation and the startability at engine restart can be balanced. That is, in a range of relatively low vehicle speed, the importance is placed on reducing the engine vibration rather than improving the startability at engine restart considering that the engine vibration is likely to be sensed by the user. Meanwhile, in a range of relatively high vehicle speed, the importance is placed on improving the startability at engine restart rather than reducing the engine vibration considering that the engine vibration is unlikely to be sensed by the user. Additionally, since changes of surrounding environment are relatively small in a range of relatively low vehicle speed, the startability at engine restart in the range of relatively low vehicle speed is required more than that in the range of relatively high vehicle speed.

Also, when the air quantity blown into a cylinder of the engine during the automatic engine stop operation is increased, time taken to decrease the engine speed to "0" becomes longer since a dropping speed of engine speed becomes low. Therefore, if only temporal elements are taken into consideration, likelihood of meeting the restart condition before the engine speed reaches "0" is higher in the range of relatively high vehicle speed than in the range of relatively low vehicle speed. In a case where the restart condition is met before the engine speed reaches "0", the startability is likely to be improved since the engine is restarted with substantial cranking. To increase the air quantity blown into a cylinder of the engine during the automatic engine stop operation as the vehicle speed becomes greater is preferable in view of the aforementioned matter.

In the following, an example operation of the engine control apparatus 1 is described with reference to Fig. 2 to Fig. 4B.

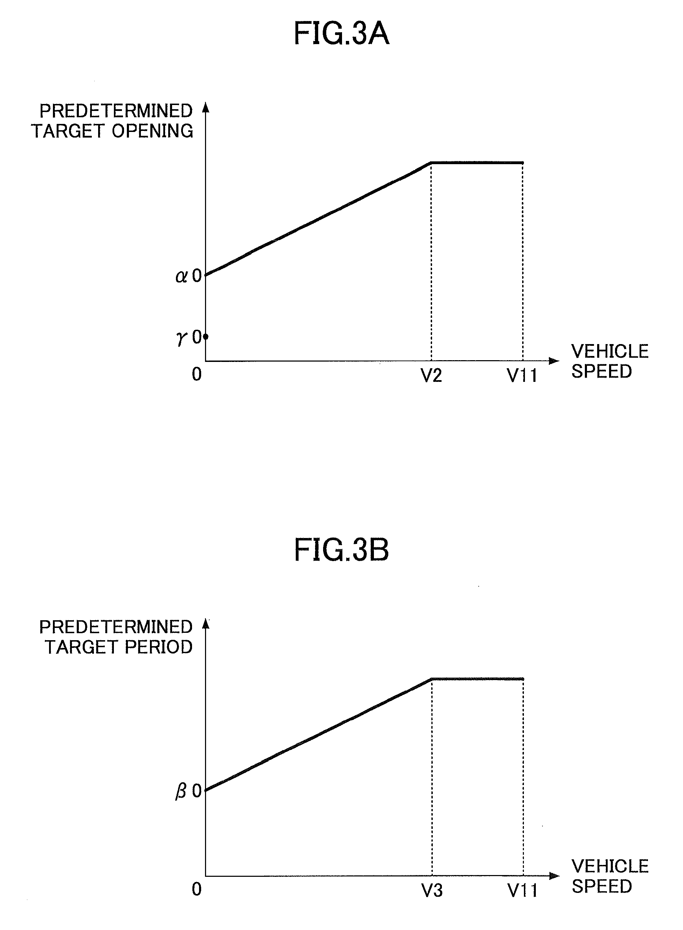

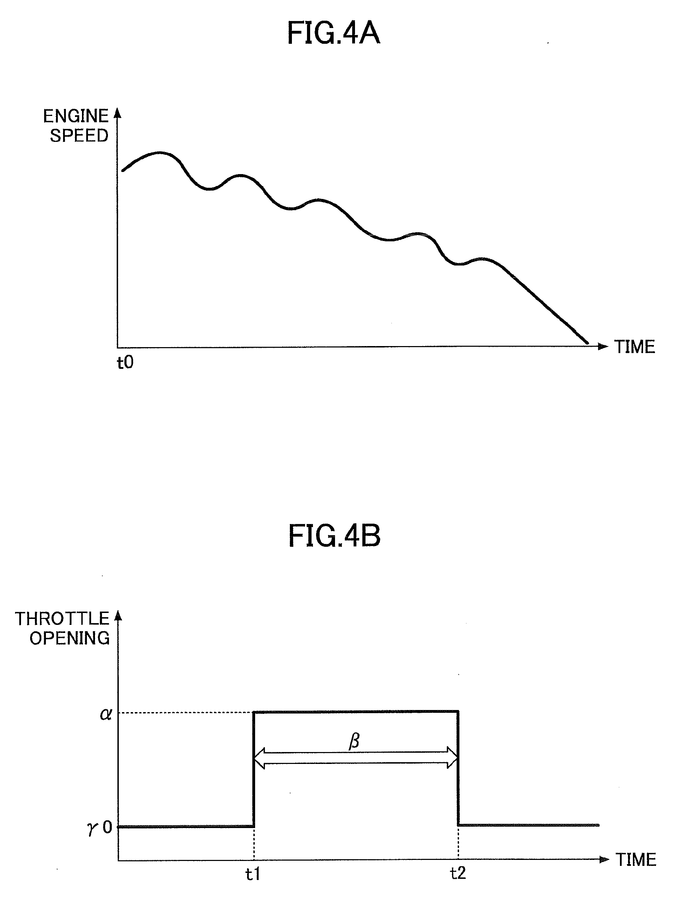

Fig. 2 is a flowchart for schematically illustrating an example of a process performed by the control device 10. Fig. 3A is a diagram for illustrating an example of a relationship between the vehicle speed and the predetermined target opening. Fig. 3B is a diagram for illustrating an example of a relationship between the vehicle speed and the predetermined target period. Fig. 4A is a timing diagram for illustrating a manner of a change in the engine speed during the automatic engine stop operation. Fig. 4B is a timing diagram for illustrating a manner of a change in the target opening of the throttle opening during the automatic engine stop operation. Additionally, although the manner of a change in the target opening of the throttle opening shown in Fig. 4B shows the manner of a change in the target opening, it can be considered to show an actual throttle opening in a case where the throttle opening is steadily controlled according to the target value (the predetermined target opening).

A process of step S200 is performed in operating the engine other than during the automatic engine stop operation. In step S200, the idle stop control unit 12 determines whether the stop condition is met. In a case where the stop condition is met, the process proceeds to step S201, while in other cases, the process waits for the stop condition to be met (repeatedly performing the process of step S200 after passing a certain period). Additionally, in a case where the stop condition is met, the idle stop control unit 12 starts to perform the fuel cut. Then, as shown in Fig. 4A, the engine speed gradually decreases.

In step S201, the determining unit 16 acquires the vehicle speed information from the sensor 20. Here, the vehicle speed information at timing when the stop condition is met is acquired. However, the vehicle speed information at the timing when the stop condition is met does not strictly mean the vehicle speed information at the timing thereof, but may include the vehicle speed information at a timing just before meeting the stop condition or just after meeting the stop condition.

In step S202, the determining unit 16 determines the predetermined target opening and the predetermined target period according to the vehicle speed with reference to the vehicle speed indicated by the acquired vehicle speed information. Here, the determining unit 16 determines them so that the predetermined target opening and the predetermined target period are increased as the vehicle speed indicated by the vehicle speed information becomes greater. For example, the determining unit 16 determines the predetermined target opening and the predetermined target period according to the vehicle speed with reference to given table data for illustrating relationships such as shown in Fig. 3A and Fig. 3B. In the example shown in Fig. 3A, the predetermined target opening is greater than "0" when the vehicle speed is "0", and it increases proportional to increase of the vehicle speed to be a constant value when the vehicle speed exceeds the predetermined value V2. Also, in the example, shown in Fig. 3B, the predetermined target period is greater than "0" when the vehicle speed is "0", and it increases proportional to increase of the vehicle speed to be a constant value when the vehicle speed exceeds the predetermined value V3. Additionally, in the examples shown in Fig. 3A and Fig. 3B, although the predetermined target opening and the predetermined target period increase proportional to increase of the vehicle speed before the vehicle speed exceeds the respective predetermined values, they may increase nonlinearly before the vehicle speed exceeds the respective predetermined values. Also, the predetermined values V2 and V3 may be the same or may be different from each other.

Here, the range of the vehicle speed (hereinafter referred to as "certain vehicle speed range") shown as a horizontal axis in Fig. 3A and Fig. 3B correspond to the restart condition whose minimum value is "0" and whose maximum value is a predetermined second vehicle speed V11. Therefore, the determining unit 16 determines the predetermined target opening and the predetermined target period in a case where the vehicle speed indicated by the vehicle speed information is within the certain vehicle speed range. In the example shown in Fig. 3A, the predetermined target opening α0 corresponding to the vehicle speed "0" is greater than "0". Also, as shown in Fig. 3B, the predetermined target period β0 corresponding to the vehicle speed "0" is greater than "0". In Fig. 3A, the target opening γ0 in the fuel cut is shown. The predetermined target opening α0 corresponding to the vehicle speed "0" is greater than the target opening γ0 in the fuel cut.

A process of step S203 is performed when the control start timing comes during the automatic engine stop operation. In step S203, the throttle control unit 14 starts to perform the throttle opening increase control according to the predetermined target opening and the predetermined target period determined by the determining unit 16. For example, the throttle control unit 14 starts to perform the throttle opening increase control after the fuel cut. Upon the throttle control unit 14 starting to perform the throttle opening increase control, the throttle opening increase is controlled until a predetermined end condition is met. The predetermined end condition may be met in a case where any one of the following conditions is met: the object of the throttle opening increase control is achieved (that is, the predetermined target period has passed); the restart condition is met; and the engine speed becomes "0".

In Fig. 4A and Fig. 4B, the manner in which the throttle opening increase control is performed is shown where the predetermined target opening and the predetermined target period are respectively determined to be α% and β ms. In the example shown in Fig. 4A and Fig. 4B, the stop condition is met at timing t0. The throttle control unit 14 starts to perform the throttle opening increase control at timing t1 just after completing a process for the fuel cut. Here, the throttle opening increase control is to increase the target opening of the throttle opening to the predetermined target opening α and keep the increased throttle opening for the predetermined target period β. Specifically, the throttle control unit 14 increases the target opening up to the predetermined target opening α so that the throttle opening reaches the predetermined target opening α at timing t1. The value γ0 corresponds to the target opening in the fuel cut (see Fig. 3A). Additionally, the throttle control unit 14 may start the throttle opening increase control when a certain period passes from completion of the fuel cut. Also, the throttle control unit 14 may gradually increase the target opening from the value γ0 to the predetermined target opening α. Additionally, as shown in Fig. 4A, even after starting the throttle opening increase control, the engine speed continues to decrease since the fuel cut is completed at start timing of the throttle opening increase control. The throttle control unit 14 keeps the state until timing t2 (=t1+β), where the target opening remains to be the predetermined target opening α. In this period, the throttle control unit 14 may perform feedback control for setting the throttle opening to be the predetermined target opening α based on the throttle opening information from the throttle control opening sensor 22. The throttle control unit 14 decreases the throttle opening to the value γ0 which is less than the predetermined target opening α at timing t2. Additionally, although, in the example shown in Fig. 4B, the value γ0 corresponds to the throttle opening in the fuel cut, another value may be chosen. As described above, the throttle control unit 14 finishes the throttle opening increase control at timing t2.

Additionally, the throttle control unit 14 immediately decreases the predetermined target opening to a certain value η in a case where the restart condition is met while performing the throttle opening increase control. That is, the throttle control unit 14 terminates the throttle opening increase control. In this case, exceptionally, the throttle opening increase control is terminated before the throttle opening time reaches the predetermined target period β. The certain value η may be equal to "0", or may be varied according to the current engine speed.

According to the example operation as shown in Fig. 2 to Fig. 4, the determining unit 16 determines the predetermined target opening and the predetermined target period to be greater as the vehicle speed indicated by the vehicle speed information becomes greater. Thus, the product quality regarding the engine vibration during the automatic engine stop operation and the startability at engine restart can be balanced.

Additionally, in the example shown in Fig. 2, although the determining unit 16 determines both of the predetermined target opening and the predetermined target period to be greater as the vehicle speed indicated by the vehicle speed information becomes greater, this is not a limiting example. For example, the determining unit 16 may determine only one of the predetermined target opening and the predetermined target period to be greater as the vehicle speed indicated by the vehicle speed information becomes greater. For example, the determining unit 16 may determine the predetermined target opening to be greater as the vehicle speed indicated by the vehicle speed information becomes greater, while determine the predetermined target period to be a constant value, for example, to be value β0 (see Fig 3B). Or, the determining unit 16 may determine the predetermined target period to be greater as the vehicle speed indicated by the vehicle speed information becomes greater, while determining the predetermined target opening to be a constant value (greater than γ0), for example, to be value α0 (see Fig 3A).

Also, in the example shown in Fig. 2, the determining unit 16 refers to the vehicle speed indicated by the vehicle speed information of timing when the stop condition is met, considering that the vehicle speed during the automatic engine stop operation affects user's sensitivity against the engine vibration. The reason is that the vehicle speed indicated by the vehicle speed information indirectly indicates the vehicle speed during the automatic engine stop operation. For example, the vehicle speed during the automatic engine stop operation tends to be high in a case where the vehicle speed indicated by the vehicle speed information of timing when the stop condition is met becomes relatively high. However, as described above, the determining unit 16 may refer to vehicle speed information acquired at different timings as far as it implies or directly indicates the vehicle speed during the automatic engine stop operation. For example, the determining unit 16 may determine the predetermined target opening and the predetermined target period according to the vehicle speed referring to the vehicle speed indicated by the vehicle speed information acquired before control start timing. The vehicle speed information acquired before control start timing may mean the vehicle speed information acquired at timing for starting the throttle opening increase control or acquired just before starting the throttle opening increase control.

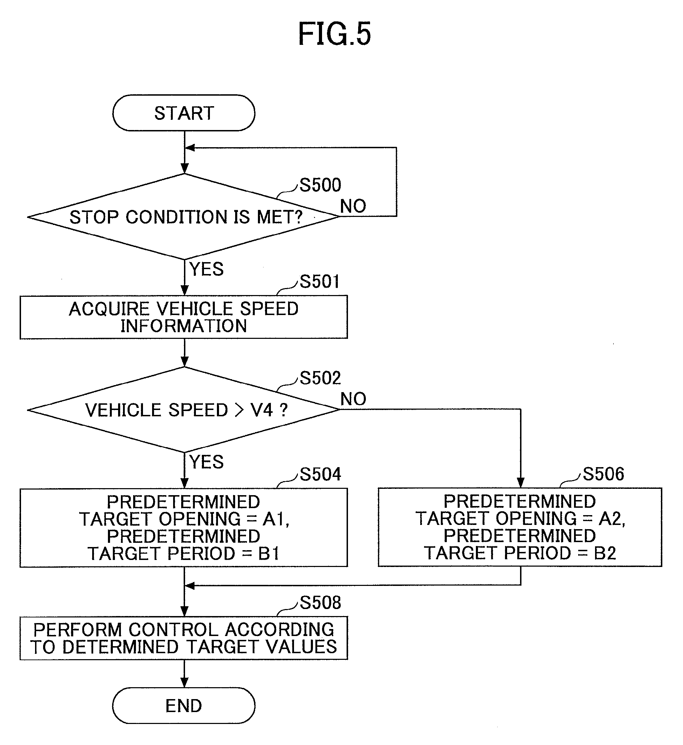

In the following, another example operation of the engine control apparatus 1 will be described with reference to Fig. 5.

Fig. 5 is a flowchart for schematically illustrating another example of the process performed by the control device 10. The process shown in Fig. 5 is performed instead of the process shown in Fig. 2.

Processes of step S500, S501 and S508 may be similar to the respective processes of step S200, S201 and S208 shown in Fig. 2.

In step S502, the determining unit 16 determines, referring to the vehicle speed indicated by the acquired vehicle speed information (acquired at timing when the stop condition is met), whether the vehicle speed is greater than a predetermined vehicle speed V4. The predetermined vehicle speed V4 may be arbitrarily set as long as it is less than the predetermined vehicle speed V1 regarding to the stop condition. For example, the predetermined vehicle speed V4 may be set to be "0". The process proceeds to step S504 in a case where the vehicle speed indicated by the vehicle speed information acquired at timing when the stop condition is met is greater than the predetermined vehicle speed V4, while proceeding to step S506 in a case where the vehicle speed is equal to or less than the predetermined vehicle speed V4.

In step S504, the determining unit 16 respectively determines the predetermined target opening and the predetermined target period to be a value A1 (%) and a value B1 (ms).

In step S506, the determining unit 16 respectively determines the predetermined target opening and the predetermined target period to be a value A2 (%) and a value B2 (ms). Here, the value A2 is greater than the value γ0 (see Fig. 3A) and less than the value A1. For example, the value A2 may be the value α0 (see Fig. 3A). Also, the value B2 is greater than "0" and less than the value B1. For example, the value B2 may be the value β0 (see Fig. 3B).

According to the example operation shown in Fig. 5, similar to the example operation shown in Fig. 2, the determining unit 16 determines the predetermined target opening and the predetermined target period to be greater as the vehicle speed indicated by the vehicle speed information becomes greater. That is, the determining unit 16 respectively determines the predetermined target opening and the predetermined target period to be the value A2 and the value B2 in a case where the vehicle speed indicated by the vehicle speed information is equal to or less than the predetermined vehicle speed V4, while it respectively determines the predetermined target opening and the predetermined target period to be the value A1 (greater than A2) and the value B1 (greater than B2) in a case where the vehicle speed indicated by the vehicle speed information is greater than the predetermined vehicle speed V4. Thus, the product quality regarding the engine vibration during the automatic engine stop operation and the startability at engine restart can be balanced.

Additionally, in the example operation shown in Fig. 5, the determining unit 16 performs the operation as follows in a case where the predetermined vehicle speed V4 is "0". In stop S&S (Stop & Start), the determining unit 16 respectively determines the predetermined target opening and the predetermined target period to be the value A2 and the value B2, while in deceleration S&S, it respectively determines the predetermined target opening and the predetermined target period to be the value A1 (greater than A2) and the value B1 (greater than B2). However, in a variation, the determining unit 16 may determine, as shown in Fig. 2, the predetermined target opening and the predetermined target period according to the vehicle speed to be greater as the vehicle speed indicated by the vehicle speed information acquired at timing when the stop condition is met becomes greater, in deceleration S&S.

Additionally, the variations with respect to the example shown in Fig. 2 may be applied to the example shown in Fig. 5. In the example shown in Fig. 5, in step S504 or S506, although the determining unit 16 determines both of the predetermined target opening and the predetermined target period according to the vehicle speed, only one of the predetermined target opening and the predetermined target period may be determined according to the vehicle speed. Also, in the example shown in Fig. 5, in step S502, although the determining unit 16 refers to the vehicle speed indicated by the vehicle speed information acquired at a timing when the stop condition is met, it may refer to the vehicle speed indicated by the vehicle speed information acquired at a different timing.

In the following, another example operation of the engine control apparatus 1 will be described with reference to Fig. 6.

Fig. 6 is a flowchart for schematically illustrating another example of the process performed by the control device 10. The process shown in Fig. 6 is performed instead of the process shown in Fig. 2.

Processes of steps S600, S601, S602, S604 and S608 may be similar to the respective processes of steps S500, S501, S502, S504 and S508 shown in Fig. 5.

In step S606, the determining unit 16 prevents the throttle control unit 14 from performing the throttle opening increase control. For example, the determining unit 16 sets a flag for preventing the throttle opening increase control. Therefore, the determining unit 16 does not substantially determine the predetermined target opening and predetermined target period. In this case, the throttle control unit 14 does not perform the throttle opening increase control. For example, the throttle control unit 14 performs control for having the target opening of the throttle opening remain to be a minimum value (for example, γ0) during the automatic engine stop operation.

According to the example shown in Fig. 6, the determining unit 16 prevents the throttle opening increase control in a case where the vehicle speed indicated by the vehicle speed information is equal to or less than the predetermined vehicle speed V4 (an example of a third threshold). Therefore, the throttle control unit 14 does not perform the throttle opening increase control in a case where the vehicle speed indicated by the vehicle speed information is equal to or less than the predetermined vehicle speed V4, while it performs the throttle opening increase control in a case where the vehicle speed indicated by the vehicle speed information is greater than the predetermined vehicle speed V4. According to the aforementioned example operation, the product quality regarding the engine vibration during the automatic engine stop operation and the startability at engine restart can still be balanced in comparison to a case where the manner in which the throttle opening increase control is performed is not changed according to the vehicle speed.

Additionally, in the example operation shown in Fig. 6, the throttle control unit 14 and the determining unit 16 perform the operation as follows in a case where the predetermined vehicle speed V4 is "0". In stop S&S, the throttle control unit 14 does not perform the throttle opening increase control, while in deceleration S&S, it performs the throttle opening increase control. However, in a variation, the determining unit 16 may determine, as shown in Fig. 2, the predetermined target opening and the predetermined target period according to the vehicle speed to be greater as the vehicle speed indicated by the vehicle speed information acquired at timing when the stop condition is met becomes greater, in deceleration S&S.

Also, in the example shown in Fig. 6, the determining unit 16 refers to the vehicle speed indicated by the vehicle speed information of timing (an example of certain timing) when the stop condition is met, considering that the vehicle speed during the automatic engine stop operation affects user's sensitivity against the engine vibration. However, as described above, the determining unit 16 may refer to vehicle speed information acquired at a different timing (an example of a certain timing) as far as it implies or directly indicates the vehicle speed during the automatic engine stop operation. Also, in a case where the throttle opening increase control is determined to be performed while performing the determination in step S602 (while determining whether to perform the throttle opening increase control) referring to the vehicle speed information acquired at timing when the stop condition is met, the determining unit 16 may determine the predetermined target opening and the predetermined target period according to the vehicle speed referring again to the vehicle speed indicated by the vehicle speed information acquired before the control start timing which comes after the stop condition has been met.

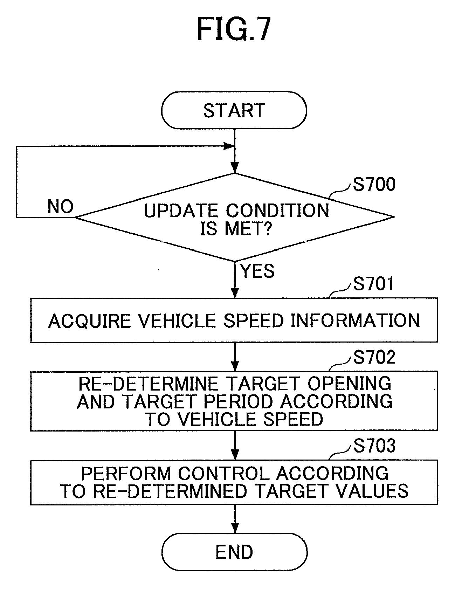

In the following, another example operation of the engine control apparatus 1 will be described with reference to Fig. 7.

Fig. 7 is a flowchart for schematically illustrating an example of the process performed by the control device 10 during the throttle opening increase control. The process shown in Fig. 7 is performed instead of the process of step S203 shown in Fig. 2. That is, although in the process of step S203 shown in Fig. 2, the determining unit 16 does not change the predetermined target opening and the predetermined target period according to the vehicle speed during the throttle opening increase control, in the process shown in Fig. 7, the determining unit 16 may change the predetermined target opening and the predetermined target period during the throttle opening increase control.

In step S700, the determining unit 16 determines whether the update condition is met. The update condition may be arbitrarily set. For example, the update condition may be met when the vehicle speed at a start timing of the throttle opening increase control (or at last update timing) is greater than "0", and a certain period passes from the start timing of the throttle opening increase control (or last update timing). Also, the update condition may be met when variation width of the vehicle speed exceeds a certain value. Further, the update condition may be met when one of the aforementioned conditions is met. In a case where the update condition is met the process proceeds to step S701, while in a case where the update condition is not met the process waits for the update condition to be met (repeatedly performing the process of step S700 after passing a certain period).

In step S701, the determining unit 16 acquires the vehicle speed information from the sensor 20. The vehicle speed information currently acquired is the latest.

In step S702, the determining unit 16 re-determines (updates) the predetermined target opening and the predetermined target period according to the vehicle speed referring to the vehicle speed indicated by the vehicle speed information acquired in step S701. This process may be similar to the process of step S202.

In step S703, the throttle control unit 14 performs (continues) the throttle opening increase control in accordance with the predetermined target opening and the predetermined target period re-determined by the determining unit 16 in step S702.

According to the example shown in Fig. 7, the determining unit 16 can re-determine the predetermined target opening and the predetermined target period according to the latest vehicle speed information during the throttle opening increase control. Thus, for example, even in a case where a relatively large variance of the vehicle speed has occurred after determining the predetermined target opening and the predetermined target period, the predetermined target opening and the predetermined target period can be re-determined (updated) according to the varied vehicle speed.

Additionally, in the example shown in Fig. 7, similarly to the example shown in Fig. 2, although the determining unit 16 determines both the predetermined target opening and the predetermined target period to be greater as the vehicle speed indicated by the vehicle speed information becomes greater, this is not a limiting example. For example, the determining unit 16 may determine only one of the predetermined target opening and the predetermined target period to be greater as the vehicle speed indicated by the vehicle speed information becomes greater.

Additionally, the process shown in Fig. 7 may be performed instead of the process of step S508 shown in Fig. 5 or step S608 shown in Fig. 6. Also, the process of step S702 may be replaced with the processes of steps S502, S504 and S506 in a case where the process shown in Fig. 7 is performed instead of the process of step S508 shown in Fig. 5. Also, the process of step S702 may be replaced with the processes of steps S602, S604 and S606 in a case where the process shown in Fig. 7 is performed instead of the process of step S608 shown in Fig. 6.

Herein above, although the invention has been described with respect to a specific embodiment, the appended claims are not to be thus limited. It should be understood that the various changes, substitutions, and alterations could be made hereto without departing from the spirit and scope of the claims. Further, all or part of the components of the embodiments described above can be combined.

For example, in the aforementioned embodiment, the determining unit 16 performs processes based on the vehicle speed information from the sensor 20. The vehicle speed information may be arbitrary information as far as it indicates the vehicle speed, directly or indirectly. For example, the sensor 20 may be replaced with a sensor for detecting rotational speed of an output shaft of the transmission. In this case, the vehicle speed information shows a detected value of the rotational speed of the output shaft. Also, the determining unit 16 may acquire the vehicle speed information directly from the sensor 20 or may acquire it through an ECU (for example, a skid control computer) from the sensor 20. Further, the vehicle speed information may be acquired based on history of positioning results of a GPS (Global Positioning System) receiver (an example of a sensor).

Also, in the aforementioned embodiment, the certain timing comes when the stop condition is met, when the control is started or it may be an arbitrarily timing between the respective timings. However, the certain timing may be an arbitrary timing during the throttle opening increase control. In this case, the throttle opening increase control is started based on a constant predetermined target period and a constant predetermined target opening (that is, the target values unrelated to the vehicle speed), and the predetermined target period and/or the predetermined target opening may be updated according to the vehicle speed acquired during the throttle opening increase control (see Fig. 7).

Also, in the aforementioned embodiment, the determining unit 16 may determine the predetermined target opening to be greater as the vehicle speed indicated by the vehicle speed information becomes greater while it may set the predetermined target period to be an eventual value (time taken to decrease the engine speed to "0"). In this case, the determining unit 16 does not determine the predetermined target period as a value, and for example, the throttle control unit 14 keeps the target opening to be equal to the predetermined target opening until the engine speed reaches "0". Additionally, the throttle control unit 14 may keep the target opening to be equal to the predetermined target opening after the engine speed reaches "0". In this case, the predetermined target period corresponds to a period from a timing at which the target opening is increased to the predetermined target opening to a timing at which the engine speed is decreased to "0".

Also, in the aforementioned embodiment, although the throttle control unit 14 starts the throttle opening increase control after the fuel cut, it may start the throttle opening increase control just before completing the throttle opening increase control. For example, in a case where a direct injection engine, etc., is used, the throttle control unit 14 may start the throttle opening increase control at a timing when the intake step (intake step just before the fuel injection) is completed in a cylinder where the last fuel injection is expected. Even in this case, the engine speed does not increase according to the increase of the throttle opening. However, the control start timing may come during the fuel cut. For example, if the throttle opening increase control is started during the fuel cut, although the engine speed increases according to the increase of the throttle opening in response to performing the throttle opening increase control, which can cause uncomfortable feeling, the aforementioned effect can be still achieved.

The present application is based on Japanese Priority Application No. 2014-210487, filed on October 15, 2014, the entire contents of which are hereby incorporated by reference.

There is provided an engine control apparatus comprising: a vehicle speed detecting unit configured to detect own vehicle speed; an idle stop control unit configured to automatically stop an engine upon a stop condition being met, and restart the engine upon a restart conditions being met during or after completing the automatic engine stop operation, wherein the stop condition includes a condition of a vehicle speed being equal to or less than a first threshold value; a throttle control unit configured to perform a throttle opening increase control for increasing a target opening of throttle opening and keeping it during the automatic engine stop operation; and a determining unit configured to determine the predetermined target opening and the predetermined target period so that at least one of them is increased as the vehicle speed becomes greater.

## Claims

1. An engine control apparatus comprising:
a vehicle speed detecting unit configured to detect own vehicle speed;
an idle stop control unit configured to automatically stop an engine upon a stop condition being met, and restart the engine upon a restart condition being met during an automatic engine stop operation or after completing the automatic engine stop operation, wherein the stop condition includes a condition that is to be met when the vehicle speed detected by the vehicle speed detecting unit during the automatic engine stop operation is equal to or less than a first threshold value which is greater than "0";
a throttle control unit configured to perform a throttle opening increase control during the automatic engine stop operation, wherein the throttle opening increase control includes a process for increasing a target opening of throttle opening to a predetermined target opening and then keeping the throttle opening at the target opening for a predetermined target period which is greater than "0"; and
a determining unit configured to determine the predetermined target opening and the predetermined target period so that at least one of the predetermined target opening and the predetermined target period is increased as the vehicle speed detected by the vehicle speed detecting unit at a certain timing becomes greater, the vehicle speed detected at the certain timing defining the vehicle speed during the automatic engine stop operation.

2. The engine control apparatus as claimed in claim 1, wherein
the restart condition is met when the vehicle speed detected by the vehicle speed detecting unit during the automatic engine stop operation or after completing the automatic engine stop operation is greater than a second threshold value;
the determining unit determines the predetermined target opening and the predetermined target period in response to the vehicle speed detected by the vehicle speed detecting unit at the certain timing being within a certain vehicle speed range; and
the certain vehicle speed range is a range whose minimum value is "0" and whose maximum value is the second threshold value.

3. The engine control apparatus as claimed in claim 2, wherein the determining unit is configured to further re-determine the predetermined target opening and the predetermined target period so that at least one of the predetermined target opening and the predetermined target period is increased as the vehicle speed detected by the vehicle speed detecting unit during the throttle opening increase control becomes greater; and
the throttle control unit continues to perform the throttle opening increase control based on the predetermined target opening and the predetermined target period re-determined by the determining unit.

4. An engine control apparatus comprising:
a vehicle speed detecting unit configured to detect own vehicle speed;
an idle stop control unit configured to automatically stop an engine upon a stop condition being met, and restart the engine upon the vehicle speed detected by the vehicle speed detecting unit during an automatic engine stop operation or after completing the automatic engine stop operation being greater than a second threshold value, wherein the stop condition includes a condition that is to be met when the vehicle speed detected by the vehicle speed detecting unit during the automatic engine stop operation is equal to or less than a first threshold value which is greater than "0";
a throttle control unit configured to perform a throttle opening increase control during the automatic engine stop operation, wherein the throttle opening increase control includes a process for increasing a target opening of throttle opening to a predetermined target opening and then keeping the throttle opening at the target opening for a predetermined target period which is greater than "0"; and
a determining unit configured to determine not to perform the throttle opening increase control in response to the vehicle speed detected by the vehicle speed detecting unit at a certain timing being equal to or less than a third threshold value which is less than the second threshold value, while determining to perform the throttle opening increase control in response to the vehicle speed detected by the vehicle speed detecting unit at the certain timing being greater than the third threshold value, the vehicle speed detected at the certain timing defining the vehicle speed during the automatic engine stop operation.
